# EUROPÄISCHE PATENTANMELDUNG

(11) **EP 2 096 570 A1**
(43) Veröffentlichungstag der Anmeldung: **02.09.2009**
(21) Anmeldenummer: 09090003.6
(22) Anmeldetag: 27.02.2009
(51) Int. Cl.: G06F 21/00, G07F 7/10, G06Q 20/00, G06F 9/445

(54) **Mobiles Computersystem zum Ausführen von sicheren Transaktionen über ein ungeschütztes Kommunikationsnetzwerk**

(30) Priorität: 29.02.2008 DE 102008012427
(71) Anmelder: Micon e.V. - Verein zur Förderung der Mobilität im Internet und in Kommunikationsnetzen e.V., 18059 Rostock (DE)
(72) Erfinder: Tavangarian, Djamshid, 18055 Rostock (DE); Versick, Daniel, 18055 Rostock (DE)
(74) Vertreter: Patentanwälte Bressel und Partner

(57) **Zusammenfassung**

Die Erfindung betrifft ein System und ein Verfahren zum Ausführen einer sicheren Transaktion über ein ungeschütztes Kommunikationsnetzwerk unter Verwendung eines mobilen Computersystems sowie ein solches mobiles Computersystem. Das mobile Computersystem umfasst eine Recheneinheit zum Ausführen von sicheren Transaktionen über ein ungeschütztes Kommunikationsnetzwerk (2) auf einem mit dem Kommunikationsnetzwerk (2) verbundenen Transaktionsserver (4), wobei das mobile Computersystem (20)umfasst:
- eine Recheneinheit (22),
- einen mit der Recheneinheit (22) gekoppelten Speicher (23) und
- eine Schnittstelle (21), über die eine Verbindung mit einem Hostcomputer (11), der mit dem Kommunikationsnetzwerk (2) verbunden ist, herstellbar ist, so dass über die Schnittstelle (21) ein Datenaustausch mit dem Hostcomputer (11) ausführbar ist und eine elektrische Energie von dem Hostcomputer (11) über die Schnittstelle (21) zugeführt wird,

wobei in dem Speicher (23) auf der Recheneinheit (22) ausführbarer Programmcode einer Transaktionsmodulanwendung (28) abgelegt ist, die ausgebildet ist, über den Hostcomputer (11), und das Kommunikationsnetzwerk (2) eine verschlüsselte Verbindung mit einer auf dem Transaktionsserver (4) ausgeführten Transaktionsserveranwendung auszubilden, wobei die von der Transaktionsmodulanwendung (28) über die verschlüsselte Verbindung übertragenen und empfangenen Daten auf der Recheneinheit (22) ver- und entschlüsselt werden.

## Beschreibung

Die Erfindung betrifft ein mobiles Computersystem zum Ausführen von sicheren Transaktionen über ein ungeschütztes Kommunikationsnetzwerk auf einem mit dem Kommunikationsnetzwerk verbundenen Transaktionsserver nach dem Oberbegriff des Patentanspruchs 1 sowie ein System zum sicheren Ausführen solcher Transaktionen und ein Verfahren zum Ausführen derartiger Transaktionen unter Ausnutzung eines mobilen Computersystems.

Heute wird eine Vielzahl von Transaktionen, beispielsweise zum Ausführen von Bankaktionen zur Erledigung von Bankgeschäften über das Internet, welches als Onlinebanking bezeichnet wird, ausgeführt. Darüber hinaus ist es üblich, im Internet Waren und Dienstleistungen zu bestellen und/oder zu kaufen. Bei diesen Transaktionen müssen sensible Informationen über einen Benutzer, der die Transaktion ausführt, über das Internet oder ein anderes Kommunikationsnetzwerk übertragen werden. Kommunikationsnetzwerke wie das Internet gestatten es häufig einer Vielzahl von Personen und/oder Vorrichtungen, Daten über das Kommunikationsnetzwerk auszutauschen. Eine Übertragungsstrecke, auf der die Daten übertragen werden, ist hierbei weder unter Kontrolle desjenigen, bei dem oder mit dem die Transaktion ausgeführt werden soll (einem Anbieter, beispielsweise einer Bank, einer Onlinehandelsplattform usw.) noch unter der Kontrolle des Benutzers, beispielsweise einem Endkunden. Daher ist eine Überwachung und/oder Kontrolle, dass die übertragenen Daten nicht ausspioniert und anschließend in schädigender und/oder nicht schädigender Absicht missbraucht werden, nicht möglich. Solche Kommunikationsnetzwerke, bei denen eine Datenintegrität und eine Abhörsicherheit nicht vollständig gewährleistet werden kann, werden hier als ungeschützte Kommunikationsnetzwerke bezeichnet.

Um über solche Netzwerke dennoch Transaktionen ausführen zu können, bei denen sensible Informationen, wie beispielsweise persönliche Daten, eine Kontonummer, Passwörter und/oder andere Authentifizierungsinformationen ausgetauscht werden, zu ermöglichen, ist es aus dem Stand der Technik bekannt, zwischen einem Computer, über den der Benutzer mit dem Kommunikationsnetzwerk verbunden ist, und einer Transaktionsanwendung auf einem Transaktionsserver eines Anbieters, beispielsweise einer Bank, eine verschlüsselte Verbindung auszubilden. Hierbei werden die Datenpakete vor einer Übertragung auf dem Computer des Benutzers verschlüsselt und verschlüsselt an den Transaktionsserver bzw. dessen Transaktionsserveranwendung übertragen. Dort werden die übertragenen Daten anschließend entschlüsselt. Zu dem Benutzer zurückübertragene Daten werden von der Transaktionsserveranwendung bzw. dem Transaktionsserver verschlüsselt und auf dem Computer des Benutzers nach einer Übertragung über das Computernetzwerk entschlüsselt.

Üblich sind derzeit Transaktionsserveranwendungen, die über einen klassischen Webbrowser bedient werden können. Vorteil dieser Anwendungen ist es, dass von jedem internetfähigen Computer mit einem Webbrowser eine solche Transaktion, zum Beispiel ein Erledigen von Bankgeschäften, ausgeführt werden kann. Nachteilig ist jedoch, dass die Internetseiten durch andere Anbieter imitiert werden können. Darüber hinaus ist es bei diesen Anwendungen notwendig, dass an dem Computer des Benutzers Identifizierungs- und/oder Authentifizierungsinformationen eingegeben werden. Aufgrund der Komplexität der heutzutage verwendeten Computer besteht jedoch immer die Gefahr, dass auf dem Computer für den Benutzer unbemerkt Schadsoftware installiert ist, die es einem Dritten ermöglicht, beispielsweise eine über eine Tastatur eingegebene so genannte persönliche Identifizierungsnummern (PIN) und/oder andere Authentifizierungscodes zu erfassen und über das Kommunikationsnetzwerk (Internet) an sich (den Dritten) zu übertragen.

Eine Verbesserung erreicht man dadurch, dass man sogenannte Transaktionsmodulanwendungen, die auch als Onlinebankingapplikationen oder Onlinebankinganwendungen bezeichnet werden, verwendet. Diese Onlinebankingapplikationen gestatten es ferner, personalisiert Kontobewegungsdaten usw. auszuwerten, zu analysieren, graphisch aufzubereiten usw. Auswertungsergebnisse können abgespeichert und/oder anderen Computeranwendungen zugänglich gemacht werden. Diese Anwendungen sind so ausgeführt, dass sie nach dem aktuellen Stand der Technik eine sichere Authentifizierung und Verschlüsselung der übertragenen Daten an bzw. mit dem Transaktionsserver bzw. dessen Transaktionsserveranwendung ausführen. Hierfür sind eindeutige ID-Daten und/oder Authentifizierungsinformationen in die Onlineapplikation, beispielsweise bei der Installation, integriert. Bei diesen Anwendungen ist eine Eingabe von Authentifizierungsinformationen nicht mehr zwingend erforderlich. Dennoch darf solche Software nur auf Computern installiert werden, auf denen sichergestellt werden kann, dass keine schadhafte Software installiert ist, die beispielsweise Daten aus dem Arbeitsspeicher und/oder aus temporären Dateien der Computerrecheneinheit, die als Ausführungsumgebung dient, ausspäht.

Auf dem Markt existieren Lösungen, die mobile Transaktionen, d.h. ein Ausführen von Transaktionen von einer Vielzahl von Computern an unterschiedlichen Orten, ermöglichen sollen. Diese basieren auf kombinierten Hardware-Softwaresystemen, die einen "mobilen" Massenspeicher mit einer sich darauf befindlichen Transaktionsmodulanwendung umfassen. Der mobile Massenspeicher kann beispielsweise als so genannter USB-Stick ausgebildet sein. Zahlreiche Banken bieten solche USB-Stick basierten Lösungen an, bei denen der USB-Stick (mobile Massenspeicher) mit einem Computer verbunden wird und die auf dem Massenspeicher abgelegte Transaktionsmodulanwendung auf dem Computer anschließend gestartet und ausgeführt wird.

Das Problem einer Analyse während der Ausführung auf dem Computer des Benutzers, der im Folgenden auch als Hostcomputer bezeichnet wird, bleibt jedoch bestehen. Transaktionsmodulanwendungen sind darüber hinaus betriebssystemabhängig, so dass sie nur auf einer begrenzten Anzahl von Computern (Hostcomputern), die mit dem Kommunikationsnetzwerk verbunden sind, ausgeführt werden können.

In der US 2007/0174206 A1 wird eine so genannte sichere individuelle Identitätsvorrichtung beschrieben, die über einen USB-Schnittstelle und einen Fingerabdruckscanner verfügt. Teilnehmende Transaktionsanbieter, beispielsweise Banken, verteilen und aktivieren solche sicheren individuellen Identitätsvorrichtungen (SIID-Secure Individual Identity Devices) an registrierte Benutzer. Jede sichere individuelle Identifikationsvorrichtung ist eine tragbare biometrisch aktivierbare Identifikationsvorrichtung, die lokal einen Teil eines registrierten Fingerabdrucks zusammen mit einem verschlüsselten Code umfasst, der zum Verifizieren und Authentifizieren des Benutzers verwendet wird, wodurch die Verwendung von Personendaten oder Finanzdaten für diese Zwecke vermieden wird. Das in dieser Druckschrift beschriebene Verfahren nutzt darüber hinaus einen Authentifizierungsserver, so dass eine Authentifizierung nicht mehr direkt bei dem Transaktionsanbieter, beispielsweise der Bank, ausgeführt wird. Dieses macht es erforderlich, einer weiteren Institution vertrauliche Informationen zukommen zu lassen.

Aus der DE 10 2005 030 305 A1 ist ein Verfahren zur digitalen Authentifizierung unter Verwendung eines externen Speichermediums für einen Computer beschrieben. Beschrieben ist ein Verfahren zur digitalen Authentifizierung bei Diensten mit einem Computer und einem mobilen Datenträger, der eine eindeutige ID aufweist, wobei der mobile Datenträger am Computer angeschlossen ist und auf dem mobilen Datenträger digitale Authentifizierungsdaten abgelegt sind, die mit der eindeutigen ID verknüpft sind. Das Verfahren umfasst folgende Schritte bei der Authentifizierung: Lesen der Authentifizierungsdaten vom Datenträger, Lesen der ID vom Datenträger, Überprüfen, ob eine zulässige Verknüpfung von Authentifizierungsdaten mit der ID vorliegt und wenn das der Fall ist, Bereitstellung der Authentifizierungsdaten. Zwar kann hiermit eine höhere Sicherheit bei der Ausführung einer Authentifizierung bei einer Transaktionsmodulanwendung erreicht werden, da die eigentliche Authentifizierung jedoch nach wie vor auf dem Hostcomputer erfolgt, ist auch dieses Verfahren einem Ausspähen durch schadhafte Software ausgesetzt.

In der KR 2004 008 6026 ist ein System beschrieben, bei dem ein persönlicher digitaler Assistenz (PDA) zur Verfügung gestellt wird, der mit einem Bankterminal über eine Infrarotschnittstelle oder einen Nahbereichsfunk kommuniziert. Hierbei wird eine Transaktionsmodulanwendung auf dem persönlichen digitalen Assistenten ausgeführt. Auf dem persönlichen digitalen Assistenten, der ansonsten handelsüblich ist und auf dem auch andere Anwendungen ausgeführt werden und der über mehrere unterschiedliche Schnittstellen verfügt, kann eine Kompromittierung durch Schadprogramme ebenfalls nicht ausgeschlossen werden. Eine umfassende Personalisierung oder Individualisierung der Transaktionsmodulanwendung, die beispielsweise eine umfassende personalisierte Analyse der Geldbewegungen bei einem Onlinebankingkonto ermöglicht, ist nicht vorgesehen.

Der Erfindung liegt somit die Aufgabe zugrunde, ein System, ein Verfahren und ein mobiles Computersystem zu schaffen, mit denen sichere Transaktionen über ein ungeschütztes Kommunikationsnetzwerk mit einer verbesserten Sicherheit ausgeführt werden können, insbesondere ohne eine Einbuße an Komfort und Funktionalität.

Die Aufgabe wird erfindungsgemäß durch ein mobiles Computersystem mit den Merkmalen des Patentanspruchs 1, ein System mit den Merkmalen des Patentanspruchs 13 sowie ein Verfahren mit den Merkmalen des Patentanspruchs 15 gelöst. Vorteilhafte Ausgestaltungen der Erfindung ergeben sich aus den Unteransprüchen.

Hierbei ist vorgesehen, dass auf einem mobilen Computersystem, welches eine Recheneinheit und einen Speicher umfasst, ein auf der Recheneinheit des mobilen Computersystems ausführbarer Programmcode einer Transaktionsmodulanwendung abgespeichert ist. Das mobile Computersystem ist ferner mit einer Schnittstelle ausgerüstet, über die das mobile Computersystem mit einem Hostcomputer, der mit einem Kommunikationsnetzwerk verbunden ist, Daten austauschen kann. Das mobile Computersystem ist so ausgebildet, dass ausschließlich der ausführbare Programmcode der Transaktionsmodulanwendung auf dem mobilen Computersystem ausführbar ist. Bei dem ausführbaren Programmcode handelt es sich um eine Gesamtheit an Programmcode, die in Betriebssystembestandteile, Hilfsprogramme und/oder Applikationen unterteilt sein kann. Bei dem Programmcode der Transaktionsmodulanwendung handelt es sich somit um eine geschlossene Gesamtheit an ausführbarem Programmcode. Das mobile Computersystem ist derart ausgestaltet, dass anderer Programmcode nicht ausführbar ist. Dies bedeutet, dass das mobile Computersystem auf der Recheneinheit ausschließlich die Transaktionsmodulanwendung ausführt. Die Transaktionsmodulanwendung ist nun so ausgebildet, dass sie, wenn das mobile Computersystem über die Schnittstelle mit einem Hostcomputer verbunden wird, direkt mit einer Transaktionsserveranwendung, d.h. beispielsweise einer Onlinebankinganwendung einer Bank, eine verschlüsselte Kommunikationsverbindung aufbaut. Die Authentifizierung des Benutzers des mobilen Computersystems, dem dieses mobile Computersystem eindeutig zugeordnet ist, erfolgt somit auf eine Weise, in der keine Daten unverschlüsselt das mobile Computersystem verlassen. Die Verschlüsselung erfolgt in der Computerumgebung des mobilen Computersystems, die vollständig geschützt ist, da andere Anwendungen auf der Recheneinheit nicht zur Ausführung gebracht werden können. Insbesondere wird ein mobiles Computersystem zum Ausführen von sicheren Transaktionen über ein ungeschütztes Kommunikationsnetzwerk auf einem mit dem Kommunikationsnetzwerk verbundenen Transaktionsserver vorgeschlagen, wobei das mobile Kommunikationssystem umfasst: eine Recheneinheit (CPU), einen mit der Recheneinheit gekoppelten Speicher und eine Schnittstelle, über die eine Verbindung mit einem Hostcomputer, der mit dem Kommunikationsnetzwerk verbunden ist, herstellbar ist, so dass über die Schnittstelle ein Datenaustausch mit dem Hostcomputer ausführbar ist, wobei in dem Speicher ein auf der Recheneinheit ausführbarer Programmcode einer Transaktionsmodulanwendung abgelegt ist und auf der Recheneinheit ausschließlich dieser Programmcode der Transaktionsmodulanwendung ausführbar ist, die ausgebildet ist, über den Hostcomputer und das Kommunikationsnetzwerk eine verschlüsselte Verbindung mit einer auf dem Transaktionsserver ausgeführten Transaktionsserveranwendung auszubilden, wobei die von der Transaktionsmodulanwendung über die verschlüsselte Verbindung übertragenen und empfangenen Daten auf der Recheneinheit ver- und entschlüsselt werden. Ferner wird ein System zum sicheren Ausführen von Transaktionen auf einem mit einem ungeschützten Kommunikationsnetzwerk verbundenen Transaktionsserver geschaffen (welches kurz auch Transaktionssystem genannt wird), welches das ungeschützte Kommunikationsnetzwerk, den Transaktionsserver, auf dem eine Transaktionsserveranwendung ausgeführt wird, und mindestens einen mit dem Kommunikationsnetzwerk verbundenen Hostcomputer sowie mindestens ein mobiles Computersystem der oben beschriebenen Art umfasst. Ferner wird ein Verfahren zum Ausführen einer Transaktion auf einem mit dem ungeschützten Kommunikationsnetzwerk verbundenen Transaktionsserver geschaffen, welches das genannte System verwendet, wobei mit dem Kommunikationsnetzwerk mindestens ein Hostcomputer verbunden ist, mit dem ein mobiles Computersystem, wie es oben beschrieben ist, koppelbar ist, welches die Schritte umfasst: Ausführen einer Transaktionsserveranwendung auf dem Transaktionsserver, Koppeln des mobilen Computersystems mit dem Hostcomputer, so dass auf dem mobilen Computersystem der in dem Speicher des mobilen Computersystems abgelegte Programmcode der Transaktionsmodulanwendung auf einer Recheneinheit des mobilen Computersystems ausgeführt wird, auf dem Hostcomputer eine Hostcomputertransaktionsanwendung ausgeführt wird, die mit der Transaktionsmodulanwendung eine verschlüsselte Kommunikationsverbindung ausbildet, über die die Hostcomputertransaktionsanwendung gesteuert wird und von der Transaktionsmodulanwendung unter Ausnutzung der Hostcomputertransaktionsanwendung eine verschlüsselte Kommunikationsverbindung über das Kommunikationsnetzwerk mit der Transaktionsserveranwendung ausgebildet wird, wobei eine Verschlüsselung und/oder Entschlüsselung der ausgetauschten Daten auf einer Nutzerseite, d.h. auf der Seite des mobilen Computersystems, auf der Recheneinheit des mobilen Computersystems ausgeführt wird. Das beschriebene mobile Computersystem, das Transaktionssystem sowie das Verfahren zum Ausführen einer Transaktion zeichnen sich dadurch aus, dass die Transaktionsmodulanwendung, über die auf der Benutzerseite die Transaktion ausgeführt wird, in einer geschützten Umgebung ausgeführt wird, die ausschließlich oder zumindest fast ausschließlich zum Ausführen von Transaktionen verwendet wird. Eine Authentifizierung und Identifizierung des Benutzers, dem das mobile Computersystem eindeutig zugeordnet ist, findet an der Transaktionsserveranwendung durch Daten statt, die auf der gesamten Übertragungsstrecke, d.h. von der Transaktionsmodulanwendung bis zur Transaktionsserveranwendung, durch eine Verschlüsselung geschützt ist. Diese verschlüsselten Daten der Kommunikationsverbindung werden durch den Hostcomputer und das Kommunikationsnetzwerk lediglich getunnelt. Das mobile Computersystem ist so ausgebildet, dass auf der Recheneinheit keine andere Anwendung als die Transaktionsmodulanwendung ausgeführt werden kann oder wird. Weder alternativ zeitlich versetzt noch "parallel".

Die erfindungsgemäße Vorrichtung ist als mobiles Computersystem bezeichnet. Hierdurch soll angedeutet werden, dass die Vorrichtung mit unterschiedlichen Hostcomputern zeitlich versetzt gekoppelt werden kann. Es versteht sich jedoch für den Fachmann, dass das mobile Computersystem auch an einem Hostrechner über eine lange Zeitspanne, also quasi stationär verwendet werden kann.

Einige Ausführungsformen des mobilen Computersystems umfassen eine Monozelle oder einen Akkumulator als Energiespeicher.

Besonders bevorzugte Ausführungsformen sind jedoch so ausgestaltet, dass die Schnittstelle so ausgebildet ist, dass während einer Verbindung zum Austauschen von Daten mit dem Hostcomputer über die Schnittstelle über diese Schnittstelle eine Versorgung mit elektrischer Energie durch den Hostcomputer möglich ist. Das mobile Computersystem ist somit so ausgebildet, dass es mit der zum Betreiben der Recheneinheit und der weiteren Komponenten des mobilen Computersystems benötigten elektrischen Energie, d.h. einer Versorgungsspannung, über die Schnittstelle versorgt werden kann und zugleich über die Schnittstelle ein Datenaustausch stattfindet.

Um eine hohe Mobilität, Kompaktheit, kleine Bauform und/oder ein geringes Gewicht des mobilen Computersystems zu gewährleisten, ist bei einer bevorzugten Ausführungsform vorgesehen, dass das mobile Computersystem keine eigenständige Energieversorgung umfasst, die in der Lage wäre, die Recheneinheit und weitere Komponenten des mobilen Computersystems über eine längere Zeitspanne mit Energie zu versorgen, um die Transaktionsmodulanwendung auszuführen. Ein Kurzzeitspeicher für elektrische Energie, beispielsweise in Form eines Kondensators, kann jedoch in dem mobilen Computer vorgesehen sein, um bei einem physikalischen Lösen der Verbindung zwischen dem Hostcomputer und dem mobilen Computersystem, in dessen Zuge eine Energieversorgung über die Schnittstelle unterbrochen wird, eine kurzzeitige Energieversorgung für die Recheneinheit bereitzustellen, um die Transaktionsmodulanwendung sachgemäß oder geordnet zu beenden. Hierüber soll eine Datenintegrität von durch die Transaktionsmodulanwendung bearbeiteten Datensätzen, die gegebenenfalls in dem Speicher abgelegt werden, gewährleistet sein. Eine hierfür benötigte Zeitspanne liegt im Bereich zwischen einigen Millisekunden und maximal einigen Sekunden. Durch eine Einsparung eines Energiespeichers, der eine langfristige Energieversorgung für die Recheneinheit zur Verfügung stellen könnte, wird eine kompakte Bauform des mobilen Computersystems ermöglicht. Es sind auch Ausführungsformen denkbar, die überhaupt keinen Energiespeicher umfassen. Vorzugsweise ist die Recheneinheit dauerhaft nur mit über die Schnittstelle zugeführter Energie betreibbar. Als dauerhaft wird eine Zeitspanne angesehen, die eine durchschnittliche Transaktion beansprucht.

Bevorzugte Ausführungsformen sind ohne eigene Energieversorgung ausgebildet.

Bei einer bevorzugten Ausführungsform der Erfindung umfasst der Speicher Arbeitsspeicher und Festwertspeicher. Der Arbeitsspeicher wird von der Recheneinheit beim Ausführen der Transaktionsmodulanwendung zum temporären Speichern von Daten verwendet. In dem Festwertspeicher werden Daten langfristig gespeichert, auch wenn eine Stromversorgung über die Schnittstelle unterbunden ist.

Der Programmcode der Transaktionsmodulanwendung ist somit vorteilhaft in dem Festwertspeicher abgelegt.

Um eine Authentifizierung an der Transaktionsserveranwendung zu ermöglichen, sind bei einer bevorzugten Ausführungsform in dem Speicher Authentifizierungsinformationen abgelegt, die einem Besitzer des mobilen Computersystems eindeutig zugeordnet sind. Dies bedeutet, dass über die Authentifizierungsinformationen eine Identifizierung des Benutzers, der der Besitzer sein soll, des mobilen Computersystems möglich ist.

Bei einer Ausführungsform sind die Authentifizierungsinformationen in die Transaktionsmodulanwendung mit eingebunden. Dies bedeutet, dass die Transaktionsmodulanwendung individualisiert ist. Unterschiedliche mobile Computersysteme von verschiedenen Benutzern umfassen in einem solchen Fall unterschiedliche Transaktionsmodulanwendungen. Diese Ausführungsformen erfordern einen höheren Aufwand bei der Programmierung und Erstellung der Transaktionsmodulanwendungen für die einzelnen mobilen Computersysteme. Bei einer anderen Ausführungsform ist daher vorgesehen, dass die Authentifizierungsinformationen getrennt von der Transaktionsmodulanwendung ausgebildet sind und vorzugsweise ebenso wie der Programmcode der Transaktionsmodulanwendung in dem Festwertspeicher abgelegt sind.

Um eine Kommunikationsverbindung zwischen der Transaktionsmodulanwendung, die auf dem mobilen Computersystem ausgeführt wird, und der Transaktionsserveranwendung, die auf dem Transaktionsserver ausgeführt wird, ausbilden zu können, ist in der Regel auf dem Hostcomputer eine Hostcomputertransaktionsanwendung notwendig, die genau für diesen Zweck vorgesehen ist. Hierbei ist entscheidend, dass die Schnittstelle des mobilen Computersystems keine Netzwerkschnittstelle ist, die direkt mit dem Kommunikationsnetzwerk verbunden werden kann.

Bei einer besonders bevorzugten Ausführungsform ist vorgesehen, dass in dem Speicher weiterer Programmcode für mindestens eine Hostcomputeranwendung abgelegt ist, wobei der weitere Programmcode auf einer Hostrecheneinheit des Hostcomputers ausführbar ist. Dies bedeutet, dass die Hostcomputertransaktionsanwendung von dem mobilen Computersystem auf den Hostcomputer übertragen werden kann, um dort ausgeführt zu werden und ein Ausbilden der verschlüsselten Kommunikationsverbindung zwischen der Transaktionsmodulanwendung und der Transaktionsserveranwendung zu unterstützen und/oder zu bewerkstelligen.

Ein Datenaustausch zwischen der Transaktionsmodulanwendung und der Hostcomputertransaktionsanwendung erfolgt ebenfalls verschlüsselt, in der Regel gesondert verschlüsselt, so dass zumindest die nicht für einen Datenaustausch mit der Transaktionsserveranwendung vorgesehenen Daten gesondert verschlüsselt werden. Selbstverständlich kann die Kommunikationsverbindung zwischen der Hostcomputertransaktionsanwendung und der Transaktionsmodulanwendung in der Weise gesondert verschlüsselt sein, dass über diese Verbindung auch die bereits verschlüsselten Daten für eine Kommunikation mit der Transaktionsserveranwendung übertragen werden.

Bei einer besonders bevorzugten Ausführungsform ist vorgesehen, dass die Hostcomputertransaktionsanwendung durch die Transaktionsmodulanwendung über einen Datenaustausch über die Schnittstelle gesteuert wird. Die Hostcomputertransaktionsanwendung wird somit durch von der Transaktionsmodulanwendung übertragene Daten gesteuert, die beispielsweise Steuerbefehle, Adressierungsinformationen und Schlüsselinformationen umfassen können, die die Hostcomputertransaktionsanwendung befähigen, eine Kommunikationsverbindung mit der Transaktionsserveranwendung auszubilden. Diese Kommunikationsverbindung kann gesondert verschlüsselt sein, muss dieses jedoch nicht unbedingt, da die eigentlichen Daten des Transaktionsvorgangs bereits auf der Recheneinheit des mobilen Computersystems auf Nutzerseite ver- und entschlüsselt werden. Auf Seiten des Transaktionsservers werden die Daten selbstverständlich ebenfalls verschlüsselt und entschlüsselt, so dass diese nur in der Recheneinheit des mobilen Computersystems entschlüsselt werden können. Die Hostcomputertransaktionsanwendung tauscht mit der Transaktionsserveranwendung keine Daten aus, die nicht ausschließlich zum Ausbilden der Kommunikationsverbindung dienen, über die die Daten der Transaktionsmodulanwendung "getunnelt" werden.

Das mobile Computersystem soll möglichst leicht, klein, handlich und kompakt ausgebildet sein. Ebenso wie die Einsparung einer Energieversorgung ist es daher auch von Vorteil, wenn das mobile Computersystem keine oder nur eingeschränkte Ein- und Ausgabeeinrichtungen zum Erfassen von Nutzereingaben und Ausgeben von Informationen an den Benutzer oder gar keine solchen Ein- und/oder Ausgabeeinrichtungen umfasst.

Vorteilhafterweise ist die Hostcomputertransaktionsanwendung daher dazu ausgebildet, Nutzereingaben und/oder Nutzerausgaben über Schnittstellen und/oder Ein- und Ausgabevorrichtungen des Hostcomputers für die Transaktionsmodulanwendung zu erfassen und/oder auszugeben. Dies bedeutet, dass die Hostcomputertransaktionsanwendung verwendet wird, um dem Nutzer Informationen auszugeben und/oder Eingaben des Nutzers zu erfassen. Die Hostcomputertransaktionsanwendung nutzt hierfür Ein- und Ausgabevorrichtungen des Hostcomputers und/oder Schnittstellen des Hostcomputers.

Bevorzugt ist die Hostcomputertransaktionsanwendung ausgebildet, Nutzereingaben über auf einer Anzeigevorrichtung des Hostcomputers dargestellte Bedienelemente, die über ein Zeigereingabeinstrument des Hostcomputers aktivierbar sind, zu erfassen. Eine solche Erfassung von Nutzereingaben ist auf einem Hostcomputer, der selbst beispielsweise mit Schadsoftware befallen ist, sehr viel schwieriger auszuspionieren, als beispielsweise eine direkte Eingabe über eine Tastatur, über die alphanumerische Zeichen direkt eingegeben werden. Vorteilhafterweise wird für eine Erfassung alphanumerischer Zeichen somit beispielsweise eine Tastatur auf der Anzeigevorrichtung, die beispielsweise ein Computerbildschirm ist, welcher frei programmierbar ist, angezeigt. Die Erfassung bzw. Eingabe der alphanumerischen Zeichen erfolgt dann beispielsweise indem ein Cursor, beispielsweise mittels einer Maus oder eines anderen Zeigereingabegeräts, so bewegt wird, dass eine der dargestellten Tasten der dargestellten Tastatur markiert ist. Über ein Anklicken einer Maustaste oder eines anderen Bedienelements des Zeigergeräts oder sogar eventuell einer Taste einer in Hardware ausgeführten Tastatur wird dann eine Eingabe erfasst und über eine Korrelation der Position des Cursors und der an dieser Stelle dargestellten Taste bzw. dem dieser Taste zugeordneten alphanumerischen Zeichen dieses als Nutzereingabe erfasst.

Um sicherzustellen, dass ein entwendetes mobiles Computersystem von einem Benutzer, dem dieses nicht zugeordnet ist, nicht ohne weiteres zum Ausführen von Transaktionen verwendet werden kann, ist vorzugsweise vorgesehen, dass die Transaktionsmodulanwendung eine (eigenständige) Authentifizierung des Benutzers einfordert.

Bei einer Ausführungsform ist vorgesehen, dass eine Authentifizierung des Benutzers über eine über den Hostcomputer und die Hostcomputertransaktionsanwendung erfasste Nutzereingabe, beispielsweise eine PIN, die alphanumerische Zeichen umfassen kann, erfolgt.

Bei einer anderen Ausführungsform des mobilen Computersystems ist ein Sensor zum Erfassen von Authentifizierungsdaten vorgesehen, insbesondere ein Fingerabdruckscanner. Bei einem solchen mobilen Computersystem kann eine Authentifizierung über ein Einlesen eines Fingerabdrucks des zugeordneten Benutzers und einen Abgleich mit einem in dem Speicher abgelegten Fingerabdruck erfolgen. Der Fingerabdruck kann einzeln und/oder zusätzlich zu einer über die Hostcomputertransaktionsanwendung erfassten PIN verwendet werden. Der im Speicher abgelegte Fingerabdruck kann den Authentifizierungsinformationen zugefügt sein, die in dem Festwertspeicher abgelegt sind.

Die Schnittstelle ist vorzugsweise eine standardisierte Schnittstelle, um eine hohe Einsetzbarkeit an möglichst vielen unterschiedlichen Hostcomputern zu ermöglichen. Daher ist bei einer bevorzugten Ausführungsform vorgesehen, dass die Schnittstelle eine USB-Schnittstelle oder eine FireWire-Schnittstelle ist. Diese beiden seriellen Schnittstellentypen, die jeweils auch über die Fähigkeit verfügen, ein Gerät mit einer Versorgungsspannung, d.h. elektrischer Energie, zu versorgen, sind weit verbreitet und daher gut geeignet. Spezielle Ausführungsformen können so ausgestaltet sein, dass sie zwei oder mehr unterschiedliche standardisierte Schnittstellen umfassen. Ausführungsformen des mobilen Computersystems mit einer eigenen Energieversorgung können auch eine Bluetooth-Schnittstelle oder eine andere Funkschnittstelle umfassen.

Viele Betriebssysteme von Hostcomputern sind so ausgebildet, dass sie für bestimmte Peripheriegeräte, die über eine solche standardisierte Schnittstelle mit dem Hostcomputer verbunden werden, ein Autostartmechanismus bereitstellen, der in der Lage ist, eine Anwendung des Peripheriegerätes und/oder eine hiermit verknüpfte Anwendung automatisch auszuführen, wenn das Peripheriegerät mit dem Hostcomputer über die Schnittstelle verbunden wird. Die Hostcomputertransaktionsanwendung kann somit als eine solche Anwendung ausgebildet sein, die über einen solchen Autostartmechanismus bei einem Verbinden des mobilen Computersystems mit dem Hostcomputer automatisch gestartet wird. Bei einer Ausführungsform ist vorgesehen, dass die Hostcomputertransaktionsanwendung als ausführbare Anwendung eines Autostartmechanismus des Hostcomputers bei einer Ausbildung einer Verbindung über die Schnittstelle ausgebildet ist.

Bei einer weiteren Ausführungsform der Erfindung ist vorgesehen, dass die Transaktionsmodulanwendung bei einer Versorgung des mobilen Computersystems mit der Versorgungsspannung über die Schnittstelle, d.h. bei einer Energieversorgung über die Schnittstelle, automatisch gestartet wird. Bei einer solchen Ausführungsform ist es nicht notwendig, dass der Nutzer weitere Schritte unternimmt, um die Transaktionsmodulanwendung auf dem mobilen Computersystem zu starten. Insbesondere bei Hostcomputern, die zusätzlich über einen Autostartmechanismus verfügen, der die Hostcomputertransaktionsanwendung bei einem Ausbilden der Verbindung zwischen dem Hostcomputer und dem mobilen Computersystem automatisch ausführt, wird somit ein Transaktionsvorgang automatisch über ein Ausbilden der Verbindung zwischen dem mobilen Computersystem und dem Hostcomputer gestartet. Anschließend muss der Nutzer lediglich gegebenenfalls eine Authentifizierung, wie oben beschrieben, durchführen und/oder Nutzereingaben, die im Rahmen der Transaktion notwendig sind und von der Transaktionsmodulanwendung mittels der Hostcomputertransaktionsanwendung über den Hostcomputer und dessen Ein- und Ausgabevorrichtungen erfasst werden, eingeben.

Die Transaktionsmodulanwendung ist vorzugsweise so ausgebildet, die ausgeführten Transaktionen zu protokollieren und/oder zu analysieren und/oder von der Transaktionsserveranwendung übertragene Informationen zu analysieren, aufzubereiten und/oder zu speichern sowie gegebenenfalls auszugeben. Dies bedeutet, dass das mobile Computersystem so ausgebildet ist, dass die Transaktionsmodulanwendung eine individualisierte Auswertung von Transaktionsdaten, beispielsweise von Kontodaten einer Onlinebankingtransaktion, ermöglicht. Da diese aufwendigen Programmcodeteile bei einem hier vorgeschlagenen System von der Transaktionsmodulanwendung umfasst sind, kann die Hostcomputertransaktionsanwendung klein und kompakt gehalten werden und leicht auf unterschiedliche Betriebssysteme portiert werden.

Bei einer bevorzugten Ausführungsform der Erfindung sind daher in dem Speicher des mobilen Computersystems verschiedene weitere Programmcodes abgelegt, die ausführbaren Computercode für die Hostcomputertransaktionsanwendung darstellen und jeweils auf unterschiedlichen Betriebssystemen und/oder Rechnerarchitekturen, d.h. in unterschiedlichen Ausführumgebungen, ausführbar sind.

Um dem Nutzer darüber hinaus zu gestatten, Daten auf dem mobilen Computersystem zwischenzuspeichern, ist bei einer Ausführungsform der Erfindung vorgesehen, dass die Transaktionsmodulanwendung ein externes Speichermedium emuliert und hierbei einen Teil des Speichers als Speicher für den Hostcomputer bereitstellt. Dieser bereitgestellte Teil des Speichers enthält keine sicherheitsrelevanten Daten oder sicherheitsrelevanten ausführbaren Programmcode und stellt sich für den Hostcomputer als ein externer Speicher dar. Ein solches mobiles Computersystem verhält sich gegenüber einem Hostcomputer wie ein gewöhnlicher Speicherstick, beispielsweise USB-Stick, der bei einem Verbinden mit dem Hostcomputer, vorzugsweise über den Autostartmechanismus, die Hostcomputertransaktionsanwendung auf diesem startet und anschließend mittels der Transaktionsmodulanwendung die Transaktion mit dem Transaktionsserver bzw. der Transaktionsserveranwendung initiiert. Hierfür ist es vorteilhaft, wenn die Transaktionsmodulanwendung bei einer Versorgung mit der Versorgungsspannung über die Schnittstelle automatisch gestartet wird.

Um sicherzustellen, dass die Transaktionsmodulanwendung und/oder gegebenenfalls zusätzlich gespeicherte Authentifizierungsdaten sowohl zur Authentifizierung an der Transaktionsserveranwendung als auch von Authentifizierungsdaten zum Authentifizieren des Benutzers an der Transaktionsmodulanwendung geschützt sind, ist bei einer bevorzugten Ausführungsform vorgesehen, dass ein Teil des Festwertspeichers, in dem der Programmcode der Transaktionsmodulanwendung und/oder die Authentifizierungsinformationen des zugeordneten Benutzers abgelegt sind, nur durch die Transaktionsmodulanwendung lesbar ist. Vorzugsweise ist dieser Teil weder durch die Transaktionsmodulanwendung und auf gar keinen Fall durch eine Anwendung des Hostcomputers oder auf andere Weise beschreibbar. Lediglich für eine Initialisierung des mobilen Computersystems ist es vorgesehen, dass der Eigentümer des Transaktionsservers die Authentifizierungsinformationen und/oder gegebenenfalls die Transaktionsmodulanwendung auf dem mobilen Computersystem in dem Speicher ablegen kann. Ein Schreib- und Leseschutz kann über den Programmcode der Transaktionsmodulanwendung und/oder hardwareseitig realisiert sein. Beispielsweise kann die Recheneinheit so ausgestaltet sein, dass Programmcodeinstruktionen nur aus dem Bereich des Speichers, insbesondere dem als Festwertspeicher ausgebildeten Teil oder sogar nur einem Abschnitt hiervon, in dem der Programmcode der Transaktionsmodulanwendung abgelegt ist, in die Recheneinheit eingelesen werden können. Darüber hinaus ist das mobile Computersystem vorzugsweise so ausgestaltet, dass ein vorhandener Arbeitsspeicher nicht als externer Speicher für die Hostcomputeranwendung verwendet werden kann. Hierdurch wird ein Ausspionieren der Transaktionsmodulanwendung auf dem mobilen Computersystem während der Ausführung der Transaktionsmodulanwendung ausgeschlossen.

Um die Daten, die bei einer Auswertung der Transaktionsinformationen, beispielsweise der Kontodaten, personalisiert gewonnen wurden, dem Benutzer auf einfache Weise zur Verfügung zu stellen, so dass diese Daten auch mit anderen Anwendungen auf einem Hostcomputer verwendet werden können, ist bei einer Ausführungsform vorgesehen, dass eine Ausgabe der protokollierten, analysierten und/oder von der Transaktionsserveranwendung übertragenen, analysierten und/oder aufbereiteten Informationen und/oder gespeicherten Informationen über ein Erstellen einer in dem als externen Speicher bereitgestellten Teil des Speichers abgelegten Datei erfolgt.

Das mobile Computersystem ist bevorzugt so ausgebildet, dass ein ursprüngliches Einspeichern der Transaktionsmodulanwendung und gegebenenfalls gesonderter Authentifizierungsdaten über eine spezielle Anwendung erfolgt, über die nur der Transaktionsanbieter verfügt. Um sicherzustellen, dass die Authentifizierungsdaten, die gesondert oder integriert in die Transaktionsmodulanwendung eingespeichert sein können, nicht ausgelesen werden können, ist die Transaktionsmodulanwendung so ausgestaltet, dass diese Daten nicht über die Schnittstelle ausgelesen werden können. Um auch eine Absicherung gegen ein Zufügen von neuem ausführbarem Programmcode zu schaffen, welches einen solches Auslesen ermöglichen könnte, ist das mobile Computersystem so ausgestaltet, dass vor einem Schreibzugriff auf einen Speicherbereich, der Teile der Programmcodegesamtheit der Transaktionsmodulanwendung oder Authentifizierungsdaten umfasst, alle Bereiche des Speichers, in denen Teile der Programmcodegesamtheit der Transaktionsmodulanwendung oder Authentifizierungsdaten gespeichert sind, gelöscht werden. Ein Löschen erfolgt so, dass alle binären Speichereinheiten modifiziert werden, beispielsweise mit dem logischen Wert Null beschrieben werden. Dieser Zwangslöschvorgang, der allen ausführbaren Code löscht bevor neuer Programmcode eingespeichert werden kann, kann über Hardware oder Software ausgeführt sein. Erfolgt seitens der Transaktionsmodulanwendung, die bei dem Überschreibvorgang noch aktiv ist, ein Zugriff auf den geschützten Speicherbereich, der für die Authentifizierungsdaten oder die Programmcodegesamtheit der Transaktionsmodulanwendung vorgesehen ist, so werden alle Teilbereiche des geschützten Speicherbereichs überschrieben. Dieses kann über eine in Software programmierte Routine oder über Hardware erfolgen. Bei einer Ausführung in Hardware ist beispielsweise eine Logikschaltung vorgesehen, die zu speichernde Daten erst an die Speichereinheiten weiterleitet, nachdem alle Speichereinheiten auf einen vorgegeben Wert, beispielsweise Null, gesetzt sind. Diese wird beispielsweise über einen Zähler erreicht, der so ausgebildet ist, dass er alle Speichereinheiten nacheinander schreibend adressiert und die Datenleitung hierbei mit einer Null versorgt. Erst wenn der Zähler die Adressen aller Speichereinheiten des geschützten Speicherbereichs einmal adressiert hat, wird die Datenleitung durch die logische Schaltung wieder freigegeben. Nun kann neuer ausführbarer Programmcode in den geschützten Speicherbereich geschrieben werden. Dieses erfolgt noch unter der Kontrolle der bisher gespeicherten Transaktionsmodulanwendung. Ist der Speichervorgang beendet, löscht sich die Transaktionsmodulanwendung selbst, indem sie die Bereiche des Arbeitsspeichers überschreibt, in denen eine Kopie oder kopierte Teile der Transaktionsmodulanwendung noch vorhanden sind. Danach übergibt die Transaktionsmodulanwendung die Kontrolle über die Recheneinheit an den neu gespeicherten Programmcode, vorzugsweise indem ein Neustart der Recheneinheit, quasi ein Bootvorgang, ausgelöst wird.

Die Merkmale des erfindungsgemäßen Systems zum Ausführen einer Transaktion sowie die Merkmale des erfindungsgemäßen Verfahrens weisen dieselben Vorteile wie die entsprechenden Merkmale des mobilen Computersystems auf.

Nachfolgend wird die Erfindung anhand bevorzugter Ausführungsbeispiele unter Bezugnahme auf eine Zeichnung näher erläutert. Hierbei zeigt:

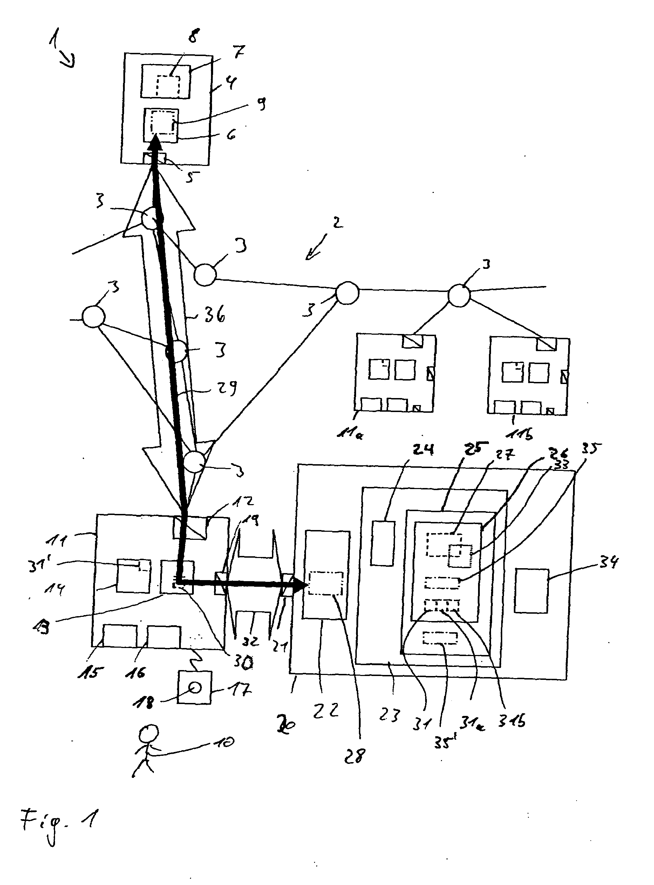

Fig. 1 eine schematische Darstellung eines Systems zum Ausführen einer Transaktion über ein ungesichertes Kommunikationsnetzwerk.

In Fig. 1 ist schematisch ein System 1 zum Ausführen einer Transaktion über ein ungeschütztes Kommunikationsnetzwerk 2, welches beispielsweise das Internet ist, dargestellt. Das Kommunikationsnetzwerk 2 umfasst in der dargestellten Ausführungsform eine Vielzahl von miteinander verbundenen, als Knoten 3 bezeichneten Kommunikationsvorrichtungen, die beispielsweise Computer sind. Als beispielhafte Transaktion soll das Ausführen von Bankgeschäften über ein sogenanntes Onlinebanking beschrieben werden. Mögliche Transaktionen können jedoch andere Vorgänge, beispielsweise eine Teilnahme an einer Auktion, ein Erwerben von Gegenständen und/oder Dienstleistungen usw. sein.

Eine Bank stellt einen Transaktionsserver 4 bereit, der über eine Serverschnittstelle 5 mit dem Kommunikationsnetzwerk 2 verbunden ist. Der Transaktionsserver 4 umfasst ferner eine Serverrecheneinheit 6 und einen Serverspeicher 7. In dem Serverspeicher 7 ist ein Programmcode 8 einer Transaktionsserveranwendung gespeichert. Der Programmcode ist in Fig. 1 jeweils durch gestrichelte Linien angedeutet. Auf der Serverrecheneinheit 6 kann der Programmcode 8 ausgeführt werden, so dass eine Transaktionsserveranwendung 9 durch den Transaktionsserver 4 bereitgestellt wird. Auf einer Recheneinheit ausgeführte Anwendungen sind in Fig. 1 jeweils durch Strich-Punkt-Punkt-Linien angedeutet. Die Transaktionsserveranwendung 9 ist ausgebildet, die Funktionalität zum Ausführen von Bankgeschäften über das Kommunikationsnetzwerk 2 bereitzustellen.

Ein Benutzer 10 nutzt einen Hostcomputer 11, der über eine Hostcomputernetzwerkschnittstelle 12 mit dem Kommunikationsnetzwerk 2 verbunden ist. Der Hostcomputer 11 wird in der Regel ein gewöhnlicher PC, ein Laptop oder Ähnliches sein. Dieser umfasst eine Hostcomputerrecheneinheit 13 sowie einen Hostcomputerspeicher 14. Ferner umfasst der Hostcomputer 11 eine Eingabeeinheit 15, welche beispielsweise als Tastatur ausgebildet ist, und eine Ausgabeeinheit 16, welche vorzugsweise eine Anzeigevorrichtung, insbesondere eine frei programmierbare Anzeigevorrichtung, beispielsweise ein Flachbildschirm oder Ähnliches ist. Der Hostcomputer 11 umfasst ferner ein Zeigereingabegerät 17. Über dieses kann beispielsweise ein Cursor auf der Anzeigeeinheit bewegt werden und zusätzlich über ein Betätigungselement 18 eine Eingabe des Benutzers 10 erfasst werden. Zusätzlich umfasst der Hostcomputer eine Hostcomputerschnittstelle 19, die so ausgebildet ist, dass sie einerseits einen Datenaustausch mit einem Peripheriegerät ermöglicht und andererseits in der Lage ist, dem Peripheriegerät elektrische Energie über ein Bereitstellen einer Versorgungsspannung zuzuführen. Die Hostcomputerschnittstelle 19 ist beispielsweise als USB-Schnittstelle nach dem Standard USB 2.0 oder 1.1 (Universal Serial Bus - USB) ausgebildet. Alternativ kann die Hostcomputerschnittstelle 19 auch als so genannte FireWire-Schnittstelle gemäß dem Standard IEEE 1394a oder IEEE 1394b ausgebildet sein. Um mit dem Rechner der Bank, dem Transaktionsserver 4 bzw. der darauf ausgeführten Transaktionsserveranwendung 9 in Verbindung zu treten, muss der Benutzer 10 eine so genannte Onlinebankingapplikation, die im Folgenden als Transaktionsmodulanwendung bezeichnet wird, nutzen.

Im Stand der Technik ist es üblich, eine solche Onlinebankingapplikation auf der Hostcomputerrecheneinheit 13 auszuführen. Bei dem in Fig. 1 beschriebenen System ist dieses jedoch nicht der Fall. Vielmehr nutzt der Benutzer 10 ein mobiles Computersystem 20. Dieses verfügt über eine Schnittstelle 21, die mit der Hostcomputerschnittstelle 19 so verbindbar bzw. koppelbar ist, dass hierüber ein Datenaustausch sowie eine Energiezufuhr zu dem mobilen Computersystem 20, d.h. ein Zuführen einer Versorgungsspannung, möglich ist und im gekoppelten bzw. verbundenen Zustand erfolgt. Die Schnittstelle 21 des mobilen Computersystems 20 ist somit vorzugsweise ebenfalls eine USB-Schnittstelle oder FireWire-Schnittstelle. Das mobile Computersystem 20 umfasst eine Recheneinheit 22 sowie einen mit der Recheneinheit 22 gekoppelten Speicher 23. Der Speicher 23 unterteilt sich vorteilhafterweise in Arbeitsspeicher 24 und Festwertspeicher 25. Der Festwertspeicher 25 ist so ausgebildet, dass darin gespeicherte Informationen erhalten bleiben, auch wenn dem mobilen Computersystem 20 keine elektrische Energie zugeführt wird. Der Arbeitsspeicher kann hingegen so ausgestaltet sein, dass die darin enthaltenen und gespeicherten Informationen verloren gehen, wenn das mobile Computersystem 20 von dem Hostcomputer 11 getrennt wird und somit nicht mehr über die Schnittstelle 21 mit elektrischer Energie versorgt wird.

Der Festwertspeicher 25 ist vorzugsweise so aufgebaut, dass er einen geschützten Bereich 26 umfasst, der so ausgestaltet ist, dass dieser nur von der Recheneinheit 22 des mobilen Computersystems 20 ausgelesen werden kann. In diesem geschützten Bereich 26 des Festwertspeichers 25 ist Programmcode 27 der Transaktionsmodulanwendung gespeichert. Dieser ist so ausgebildet, dass er auf der Recheneinheit 22 des mobilen Computersystems 20 ausgeführt werden kann und eine Transaktionsmodulanwendung 28 bereitstellt. Die Transaktionsmodulanwendung 28 ist eine vollwertige Onlinebankingapplikation.

Um zwischen der Onlinebankingapplikation, d.h. der Transaktionsmodulanwendung 28, und der Transaktionsserveranwendung 9 eine verschlüsselte Kommunikationsverbindung 29 ausbilden zu können, wird eine so genannte Hostcomputertransaktionsanwendung 30 auf dem Hostcomputer 11 benötigt. Ein zugehöriger Programmcode 31 der Hostcomputertransaktionsanwendung 30 ist ebenfalls vorzugsweise in dem geschützten Bereich 26 des Festwertspeichers 25 des Speichers 23 des mobilen Computersystems gespeichert. Bei einer Ausführungsform kann dieser Programmcode 31 in den Hostcomputerspeicher 14 übertragen und dort als Kopie 31' abgelegt werden. Die Kopie 31' des Programmcodes 31 kann auf der Hostcomputerrecheneinheit 13 ausgeführt werden, so dass die Hostcomputertransaktionsanwendung 30 von dem Hostcomputer 11 bereitgestellt wird. Die Hostcomputerrecheneinheit 13 kann den Programmcode 31 auch direkt von dem mobilen Computersystem 20 aus ausführen. Die Transaktionsmodulanwendung 28 stellt dann auf Anforderung entsprechende Teile des Programmcodes 31 bereit. Da die Hostcomputertransaktionsanwendung 30 auf der Hostcomputerrecheneinheit 13 ausgeführt wird, muss der Programmcode 31 entsprechend an das Betriebssystem bzw. die Ausführungsumgebung, beispielsweise Rechnerarchitektur usw., des entsprechenden Hostcomputers 11 angepasst sein. Um das mobile Computersystem 20 auch mit weiteren Hostcomputern 11a-11b, die ähnlich zu dem Hostcomputer 11 ausgebildet sind und ebenfalls mit dem Kommunikationsnetzwerk 2 verbunden sind, benutzen zu können, sind in dem gesicherten Bereich 26 des Festwertspeichers 25 des mobilen Computersystems 20 unterschiedliche Varianten des Programmcodes 31, 31a, 31b der Hostcomputertransaktionsanwendung abgelegt.

Das mobile Computersystem 20 ist vorzugsweise so ausgebildet, dass auf der Recheneinheit 22 die Transaktionsmodulanwendung 28 automatisch ausgeführt wird, sobald das mobile Computersystem über die Schnittstelle 21 mit elektrischer Energie versorgt wird, d.h. sobald das mobile Computersystem 20 mit dem Hostcomputer 11 über die Schnittstelle 21 und die Hostcomputerschnittstelle 19 verbunden wird. Verfügt das Betriebssystem des Hostcomputers 11 über einen Autostartmechanismus, der aktiviert wird, sobald ein Peripheriegerät mit der Hostcomputerschnittstelle 19 verbunden wird, so wird dieser Mechanismus ausgenutzt, um die Hostcomputertransaktionsanwendung 30 auf der Hostcomputerrecheneinheit 13 zu starten. Je nach Ausführungsform des Autostartmechanismus kann hierbei eine Kopie 31' des Programmcodes der Hostcomputertransaktionsanwendung 30 in dem Hostcomputerspeicher 14 abgelegt werden. Hierbei wird das Betriebssystem des Hostcomputers ermittelt und die entsprechende Variante des Programmcodes 31, 31a, 31b für die Hostcomputertransaktionsanwendung 30 ausgewählt und verwendet.

Zwischen der Transaktionsmodulanwendung 28 und der Hostcomputertransaktionsanwendung 30 wird eine verschlüsselte Kommunikationsverbindung 32 ausgebildet. Hierdurch wird die Transaktionsmodulanwendung 28, die auf der Recheneinheit 22 des mobilen Computersystems 20 ausgeführt wird, in die Lage versetzt, die Hostcomputertransaktionsanwendung 30 zu verwenden, um die vorzugsweise verschlüsselte Verbindung 36 zu der Servertransaktionsanwendung 9 auszubilden. Die von der Servertransaktionsanwendung 9 benötigten Authentifizierungsdaten sind entweder in dem Programmcode 27 der Transaktionsmodulanwendung 28 enthalten oder gesondert als Authentifizierungsdaten 33 in den geschützten Bereich 26 des Festwertspeichers 25 abgelegt. Diese werden verwendet, um den Benutzer 10, dem das mobile Computersystem 20 zugeordnet ist, bei der Onlinebankingapplikation, die durch die Servertransaktionsanwendung 9 verkörpert ist, zu authentifizieren. Die über die verschlüsselte Verbindung 29 übertragenen Daten werden auf der Recheneinheit 22 des mobilen Computersystems 20 von der Transaktionsmodulanwendung 28 verschlüsselt und zu der Transaktionsserveranwendung 9 übertragen und von dieser entschlüsselt bzw. von der Transaktionsserveranwendung 9 verschlüsselt und von der Transaktionsmodulanwendung 28 auf dem mobilen Computersystem 20 entschlüsselt. Die übertragenen Daten sind somit entlang der gesamten Kommunikationsstrecke der verschlüsselten Verbindung 29 verschlüsselt. Die Kommunikationsverbindungen 32 und 36 dienen nur zum Tunneln der verschlüsselten Verbindung 29. Die Verbindung 36 muss nicht verschlüsselt sein, da ja bereits die verschlüsselten Verbindung 29 verschlüsselt ist.

Um die Sicherheit weiter zu steigern und sicherzustellen, dass das mobile Computersystem 20 nur von dem zugeordneten Benutzer 10 und nicht einem anderen beliebigen Benutzer verwendet werden kann, ist bei einer bevorzugten Ausführungsform vorgesehen, dass der Nutzer sich an der Transaktionsmodulanwendung 28 authentifizieren muss. Hierfür ist bei der beschriebenen Ausführungsform eine Sensoreinheit 34 vorgesehen, die beispielsweise als Fingerabdruckscanner ausgebildet ist. Über diesen Sensor 34 wird somit ein Fingerabdruck des Benutzers 10 erfasst und mit in den Authentifizierungsdaten 33 gespeicherten Fingerabdruckdaten zur Authentifizierung verglichen. Alternativ und/oder zusätzlich kann ein Authentifizierungscode in Form einer PIN, d.h. eines numerischen oder alphanumerischen Codes, über den Hostcomputer 11 erfasst werden. Hierzu steuert die Transaktionsmodulanwendung 28 die Hostcomputertransaktionsanwendung 30 so an, dass diese beispielsweise auf der Anzeigeeinheit 16 eine "virtuelle" Tastatur darstellt. Der Nutzer kann nun einen Cursor über das Zeigereingabegerät 17 bewegen und einzelne dargestellte Tasten, auf die der Cursor zeigt, dadurch betätigen, dass er das Betätigungselement 18 des Zeigereingabegeräts 17 betätigt. Um ein Ausspähen einer solchen PIN-Eingabe durch möglicherweise auf dem Hostcomputer 11 vorhandene Schadsoftware weiter zu verringern, ist bei einigen Ausführungsformen vorgesehen, dass die dargestellte virtuelle Tastatur bzw. die Bedienelemente der virtuellen Tastatur bei jeder Verwendung zur Authentifizierung an einer anderen Position auf der Ausgabeeinheit 16 dargestellt werden. Hierdurch wird verhindert, dass eine einmal ausgespähte Cursorpositionsfolge bei der Eingabe der PIN verwendet werden kann, um bei einer nachfolgenden Authentifizierung eine Benutzereingabe vorzutäuschen. Zwischen dem Hostcomputer 11 und dem mobilen Computersystem 20 werden über die verschlüsselte Verbindung 32 somit Ein- und Ausgabedaten von dem Nutzer an die Onlinebankingapplikation bzw. von der Onlinebankingapplikation an den Nutzer übertragen. Es ergibt sich, dass auch die Daten der verschlüsselten Verbindung 29 über die verschlüsselte Verbindung 32 übertragen werden. Für diese Daten wäre jedoch eine offene unverschlüsselte Verbindung 32 ausreichend, da sie durch die Verbindung 32 lediglich getunnelt werden.

Auch die während der Ausführung einer Onlinebankingtransaktion benötigten Ausgaben an den Benutzer 10 bzw. ein Erfassen von Nutzereingaben des Benutzers 10 erfolgen auf ähnliche Weise wie oben beschrieben über den Hostcomputer 11.

Die Transaktionsmodulanwendung 28 ist so ausgestaltet, dass sie weitere Funktionalitäten bereitstellen kann. Somit ist beispielsweise eine personalisierte Umsatzanalyse, eine grafische Darstellung einer Kontostandsbewegung usw. möglich. Die hierbei anfallenden Daten werden in dem Festwertspeicher 25 bevorzugt ebenfalls in dem geschützten Bereich 26 in einer Datei 35 abgelegt.

Besonders bevorzugt ist das mobile Computersystem 20 so ausgebildet, dass es für den Hostcomputer 11 ansonsten ein externes Speichergerät emuliert. Dies bedeutet, dass ein Teil des Festwertspeichers 25 durch die Transaktionsmodulanwendung 28 bereitgestellt wird, um hierauf beliebige Daten abzulegen und zu speichern. Es wird darauf hingewiesen, dass in dem bereitgestellten Teil des Speichers nicht der ausführbare Programmcode der Transaktionsmodulanwendung enthalten ist. Auch andere sicherheitsrelevante Informationen, beispielsweise getrennt von der Transaktionsmodulanwendung abgelegte Authentifizierungsinformationen, sind nicht in dem bereitgestellten Teil des Speichers abgelegt. Hingegen kann der Programmcode der Hostcomputertransaktionsanwendung, vorzugsweise als in Form von schreibgeschützten Dateien vorzugsweise für unterschiedliche Hostcomputerumgebungen und/oder Betriebssysteme bereitgestellt werden, die über einen Autostartmechanismus für externen Speicher aufgerufen und zur Ausführung auf der Recheneinheit des Hostcomputers gebracht werden können. Darüber hinaus bietet ein Bereitstellen eines Teils des Festwertspeichers 25 die Möglichkeit, die durch die Transaktionsmodulanwendung 28 gesammelten Daten, beispielsweise Kontobewegungsdaten, Überweisungsformulare, Kontoauszüge, die erwähnten Auswertungen usw., dem Nutzer so zur Verfügung zu stellen, dass er diese mit anderen Softwareanwendungen weiter verwenden kann. Hierzu kann eine Kopie 35' der Datei 35 oder ein Auszug der Datei 35 in dem Bereich des Festwertspeichers 25 abgelegt werden, aus dem der Hostcomputer 11 Daten einlesen kann. Auf ähnliche Weise können (in umgekehrter Richtung) größere Datenmengen, die nicht von dem Onlinebankinganbieter stammen, der Transaktionsmodulanwendung bereitgestellt werden. Beispielsweise können mit einer anderen Anwendung vorbereitete Überweisungsauftragsdatensätze übergeben werden.

Um ein Ausdrucken von Informationen zu ermöglichen, wird ebenfalls die Hostcomputertransaktionsanwendung 30 genutzt, die in einer Ausführung so ausgestaltet ist, dass sie von der Transaktionsmodulanwendung 28 über die verschlüsselte Verbindung 33 übertragene Druckdaten entschlüsselt und an einen Drucker (nicht dargestellt), der mit dem Hostcomputer 11 verbunden ist, weiterleitet.

Das beschriebene System 1 weist den Vorteil auf, dass die Ausführung der Onlinebankingapplikation 'Transaktionsmodulanwendung 28' in einer geschützten Umgebung ausgeführt wird. Ein Ausspähen der Authentifizierungsdaten ist somit ausgeschlossen. Somit können Transaktionen wie ein Onlinebanking auch an Hostcomputern 11, 11a, 11b durch den Benutzer 10 ausgeführt werden, deren Vertrauenswürdigkeit im Hinblick auf möglicherweise installierte Schadsoftware er nicht kontrollieren kann, wie dies beispielsweise in Internetcafes der Fall ist, in denen Benutzer eine Rechnerbenutzung für begrenzte Zeitspannen gegen Entgeltzahlung erhalten können. Darüber hinaus muss die Onlinebankingapplikation selbst, d.h. die Transaktionsmodulanwendung, nur für eine Recheneinheit bzw. eine Ausführungsumgebung, die des mobilen Computersystems, programmiert werden. Lediglich die Hostcomputertransaktionsanwendungen müssen angepasst für unterschiedliche Betriebssysteme und/oder Rechnerarchitekturen bereitgestellt werden. Da diese Hostcomputertransaktionsanwendungen jedoch nur zur Ein- und Ausgabe von Daten an den Benutzer und zum Weiterleiten von bereits in der Transaktionsmodulanwendung bzw. der Transaktionsserveranwendung verschlüsselte Daten über das Kommunikationsnetzwerk verwendet werden, ist eine Anpassung der Hostcomputeranwendung an unterschiedliche Rechnerarchitekturen und/oder Betriebssysteme relativ einfach möglich. Diese Funktionalitäten werden nämlich weitestgehend durch moderne Betriebssysteme unterstützt. Selbst wenn die Hostcomputertransaktionsanwendungssoftware Betriebssystembestandteile zum Ausführen seiner Funktionalität verwendet, die möglicherweise schadhaft sind, ist hierdurch die eigentliche Authentifizierungsinformation, die den Benutzer bei dem Transaktionsanbieter, beispielsweise der Bank, authentifiziert, zu keinem Zeitpunkt gefährdet. Lediglich eine mögliche Authentifizierung des Benutzers an der Transaktionsmodulanwendung 28, d.h. bei der eigentlichen Onlinebankingapplikation, die auf dem mobilen Computersystem 20 ausgeführt wird, kann im ungünstigsten Falle ausspioniert werden. Hierbei handelt es sich aber um andere Authentifizierungsinformationen als die zur Authentifizierung beim Transaktionsanbieter, d.h. bei der Transaktionsserveranwendung benötigten Authentifizierungsinformationen. Ohne einen physischen Besitz des mobilen Computersystems 20 sind diese nutzlos. Wesentlich ist, dass auf dem mobilen Computersystem neben der Transaktionsmodulanwendung keine weiteren Anwendungen zur Ausführung kommen. Insbesondere wird kein Programmcode ausgeführt, der nicht originär durch den Transaktionsanbieter in den Festwertspeicher des mobilen Computersystems gespeichert wurde. Dadurch, dass das mobile Computersystem keinen eigenen Energiespeicher umfasst, kann es klein und kompakt, beispielsweise in Form eines handelsüblichen USB-Sticks, ausgebildet sein. Um ein geordnetes Beenden der Transaktionsmodulanwendung bei einem Trennen der Verbindung zwischen dem mobilen Computersystem 20 und dem Hostcomputer 11 zu gewährleisten, bei dessen Trennung die Energieversorgung des mobilen Computersystems 20 unterbunden wird, kann das mobile Computersystem 20 einen Kurzzeitenergiespeicher, beispielsweise einen Kondensator, umfassen, der für eine begrenzte Zeitspanne, die vorzugsweise mindestens eine Größenordnung unterhalb der Zeitspanne, die zum Ausführen einer durchschnittlichen Transaktion benötigt wird, die Recheneinheit 22 noch mit Energie versorgt, um ein geordnetes Beenden der Transaktionsmodulanwendung 28 zu gewährleisten. Hierdurch kann insbesondere eine Datenintegrität der in der Datei 35 abgelegten, im Zuge des Onlinebankings oder anderer Transaktionen erhobenen Daten erfolgen.

Die beschriebene Ausführungsform stellt lediglich eine beispielhafte Ausführungsform dar. Es ergibt sich für den Fachmann, dass eine Vielzahl von Modifikationen möglich ist. Die einzelnen beschriebenen Merkmale können in beliebiger Kombination zur Umsetzung der Erfindung miteinander kombiniert werden.

### Bezugszeichenliste

- 1: System
- 2: Kommunikationsnetzwerk
- 3: Knoten
- 4: Transaktionsserver
- 5: Schnittstelle
- 6: Serverrecheneinheit
- 7: Serverspeicher
- 8: Programmcode der Transaktionsserveranwendung
- 9: Transaktionsserveranwendung
- 10: Benutzer
- 11: Hostcomputer
- 12: Hostcomputernetzwerkschnittstelle
- 13: Hostcomputerrecheneinheit
- 14: Hostcomputerspeicher
- 15: Eingabeeinheit
- 16: Ausgabeeinheit
- 17: Zeigereingabegerät
- 18: Betätigungselement
- 19: Hostcomputerschnittstelle
- 20: mobiler Computer
- 21: Schnittstelle
- 22: Recheneinheit
- 23: Speicher
- 24: Arbeitsspeicher
- 25: Festwertspeicher
- 26: geschützter Bereich
- 27: Programmcode der Transaktionsmodulanwendung
- 28: Transaktionsmodulanwendung
- 29: verschlüsselte Verbindung
- 30: Hostcomputertransaktionsanwendung
- 31: Programmcode der Hostcomputertransaktionsanwendung
- 31': Kopie des Programmcodes der Hostcomputertransaktionsanwendung
- 32: verschlüsselte Verbindung zwischen Transaktionsmodulanwendung und Hostcomputertransaktionsanwendung
- 33: Authentifizierungsinformationen
- 34: Sensor
- 35: Datei
- 35': Kopie der Datei
- 36: verschlüsselte Verbindung

## Patentansprüche

1. Mobiles Computersystem (20) zum Ausführen von sicheren Transaktionen über ein ungeschütztes Kommunikationsnetzwerk (2) auf einem mit dem Kommunikationsnetzwerk (2) verbundenen Transaktionsserver (4), wobei das mobile Computersystem (20) umfasst:
- eine Recheneinheit (22),
- einen mit der Recheneinheit (22) gekoppelten Speicher (23), bestehend aus Arbeitsspeicher (24) und Festwertspeicher (25), und
- eine Schnittstelle (21), über die eine Verbindung mit einem Hostcomputer (11), der mit dem Kommunikationsnetzwerk (2) verbunden ist, herstellbar ist, so dass über die Schnittstelle (21) ein Datenaustausch mit dem Hostcomputer (11) ausführbar ist,
**dadurch gekennzeichnet, dass**
in dem Festwertspeicher (25) auf der Recheneinheit (22) ausführbarer Programmcode (27) einer Transaktionsmodulanwendung (28) abgelegt ist und auf der Recheneinheit (22) ausschließlich dieser Programmcode (27) der Transaktionsmodulanwendung (28) ausführbar ist, die ausgebildet ist, über den Hostcomputer (11), und das Kommunikationsnetzwerk (2) eine verschlüsselte Verbindung (29) mit einer auf dem Transaktionsserver (4) ausgeführten Transaktionsserveranwendung (9) auszubilden, wobei die von der Transaktionsmodulanwendung (28) über die verschlüsselte Verbindung (29) übertragenen und empfangenen Daten auf der Recheneinheit (22) ver- und entschlüsselt werden.

2. Mobiles Computersystem (20) nach Anspruch 1, **dadurch gekennzeichnet, dass** der Festwertspeicher (25) einen geschützten Bereich (26) umfasst, in den Daten nur geschrieben werden können, nachdem der gesamte Inhalt des geschützten Bereichs (26) gelöscht ist, wobei der Programmcode (27) der Transaktionsmodulanwendung (28) in dem geschützten Bereich gespeichert ist.

3. Mobiles Computersystem (20) nach einem der Ansprüche 1 oder 2, **dadurch gekennzeichnet, dass** in dem Speicher (23) Authentifizierungsinformationen (33) abgelegt sind, die einem Benutzer (10) des mobilen Computersystems (20) zugeordnet sind, die den Benutzer (10) an der Transaktionsserveranwendung (9) authentifizieren.

4. Mobiles Computersystem (20) nach einem der Ansprüche 1 bis 3, **dadurch gekennzeichnet, dass** in dem Speicher (23) weiterer Programmcode (31) für mindestens eine Hostcomputertransaktionsanwendung (30) abgelegt ist, wobei der weitere Programmcode (31) auf einer Hostrecheneinheit (22) des Hostcomputers (11) ausführbar ist, und dass ein Datenaustausch zwischen der Transaktionsmodulanwendung (28) und der Hostcomputertransaktionsanwendung (30) gesondert verschlüsselt erfolgt, so dass zumindest die nicht für einen Datenaustausch mit der Servertransaktionsanwendung (9) vorgesehenen Daten gesondert verschlüsselt werden.

5. Mobiles Computersystem (20) nach Anspruch 4, **dadurch gekennzeichnet, dass** die Hostcomputertransaktionsanwendung (30) ausgebildet ist, Nutzereingaben und/oder Nutzerausgaben über Schnittstellen und/oder Ein- und Ausgabevorrichtungen des Hostcomputer (11) für die Transaktionsmodulanwendung (28), die die zentrale Anwendungsfunktionalität enthält, zu erfassen und/oder auszugeben, und die Hostcomputertransaktionsanwendung (30) durch die Transaktionsmodulanwendung (28) über einen Datenaustausch über die Schnittstelle (21) gesteuert wird.

6. Mobiles Computersystem (20) nach einem der Ansprüche 1 bis 5, **dadurch gekennzeichnet, dass** die Hostcomputertransaktionsanwendung (30) ausgebildet ist, Nutzereingaben über auf einer Anzeigevorrichtung dargestellte Bedienelemente, die über ein Zeigereingabeinstrument (17) aktivierbar sind, zu erfassen.

7. Mobiles Computersystem (20) nach einem der Ansprüche 1 bis 6, **dadurch gekennzeichnet, dass** eine Authentifizierung des Benutzers (10) über eine über den Hostcomputer (11) und die Hostcomputertransaktionsanwendung (30) erfasste PIN erfolgt und/oder ein Sensor (34) zum Erfassen von Authentifizierungsdaten, z.B. ein Fingerabdruckscanner, vorgesehen ist, und die Authentifizierung des Benutzers alternativ oder zusätzlich über die erfassten Authentifizierungsdaten erfolgt.

8. Mobiles Computersystem (20) nach einem der Ansprüche 1 bis 7, **dadurch gekennzeichnet, dass** der Teil des Festwertspeichers (25), in dem der Programmcode (27) der Transaktionsmodulanwendung (28) und/oder die Authentifizierungsinformationen (33) des zugeordneten Benutzers (10) abgelegt sind, nur durch die Transaktionsmodulanwendung (28) lesbar ist.

9. Mobiles Computersystem (20) nach einem der Ansprüche 1 bis 8, **dadurch gekennzeichnet, dass** Schnittstelle (21) ausgeführt ist, neben dem Datenaustausch mit dem Hostcomputer (11) eine elektrische Energie von dem Hostcomputer (11) über die Schnittstelle (21) dem mobilen Computersystem zuzuführen, wobei das mobile Computersystem (20), insbesondere die Recheneinheit 22, dauerhaft nur mit über die Schnittstelle zugeführter Energie betreibbar ist und die Versorgung mit elektrischer Energie über die Schnittstelle 21 zu einem automatischen Start der Transaktionsmodulanwendung (28) führen kann.

10. Mobiles Computersystem (20) nach einem der Ansprüche 1 bis 9, **dadurch gekennzeichnet, dass** die Transaktionsmodulanwendung (28) ausgebildet ist, die ausgeführten Transaktionen zu protokollieren und/oder zu analysieren und/oder von der Transaktionsserveranwendung (9) übertragene Informationen zu analysieren, aufzubereiten und zu speichern, sowie gegebenenfalls auszugeben.

11. Mobiles Computersystem (20) nach einem der Ansprüche 1 bis 10, **dadurch gekennzeichnet, dass** die Transaktionsmodulanwendung (28) ein externes Speichermedium emuliert und hierbei einen Teil des Speichers (23) als Speicher für den Hostcomputer (11) bereitstellt.

12. Mobiles Computersystem (20) nach einem der Ansprüche 1 bis 11, **dadurch gekennzeichnet, dass** eine Ausgabe der protokollierten, analysierten und/oder von der Transaktionsserveranwendung (9) übertragenen, analysierten und/oder aufbereiteten Informationen und/oder gespeicherten Informationen über ein Erstellen einer in dem als externer Speicher (23) bereitgestellten Teil des Speichers abgelegten Datei erfolgt.

13. System (1) zum sicheren Ausführen von Transaktionen auf einem mit einem ungeschützten Kommunikationsnetzwerk (2) verbundenen Transaktionsserver (4), umfassend
- das ungeschützte Kommunikationsnetzwerk (2),
- den Transaktionsserver (4), auf dem eine Transaktionsserveranwendung (9) ausgeführt wird, und mindestens einen mit dem Kommunikationsnetzwerk (2) verbundenen Hostcomputer (11), sowie
- mindestens einem mobilen Computersystem (20) nach einem der Ansprüche 1 bis 12.

14. System (1) nach Anspruch 13, **dadurch gekennzeichnet, dass** der Hostcomputer (11) ausgebildet ist, auf ein Erkennen eines neu angeschlossenen Peripheriegerätes, wie dem mobilen Computersystem (20), einen Autostartmechanismus zu aktivieren, der einen von dem mobilen Computersystem (20) bereitgestellten Programmcode (31) der Hostcomputertransaktionsanwendung (30) zur Ausführung bringt.

15. Verfahren zum Ausführen einer Transaktion auf einem mit einem ungeschützten Kommunikationsnetzwerk (2) verbundenen Transaktionsserver (4), wobei mit dem Kommunikationsnetzwerk (2) mindestens ein Hostcomputer (11) verbunden ist, mit dem ein mobiles Computersystem (20) nach einem der Ansprüche 1 bis 14 koppelbar ist, umfassend die Schritte:
- Ausführen einer Transaktionsserveranwendung (9) auf dem Transaktionsserver (4),
- Koppeln des mobilen Computersystems (20) mit dem Hostcomputer (11), so dass auf dem mobilen Computersystem (20) der in dem Speicher (23) des mobilen Computersystems (20) abgelegte Programmcode (27) der Transaktionsmodulanwendung (28) auf einer Recheneinheit (22) des mobilen Computersystems (20) ausgeführt wird,
- auf dem Hostcomputer (11) eine Hostcomputertransaktionsanwendung (30) ausgeführt wird, die mit der Transaktionsmodulanwendung (28) eine verschlüsselte Kommunikationsverbindung (32) ausbildet, über die die Hostcomputertransaktionsanwendung (30) gesteuert wird, und
- von der Transaktionsmodulanwendung (28) unter Ausnutzung der Hostcomputertransaktionsanwendung (30) eine verschlüsselte Kommunikationsverbindung über das Kommunikationsnetzwerk (2) mit der Transaktionsserveranwendung (9) ausgebildet wird, wobei einer Verschlüsselung und/oder Entschlüsselung der ausgetauschten Daten (auf Nutzerseite) auf der Recheneinheit (22) des mobilen Computersystems (20) ausgeführt wird.
